# EUROPEAN PATENT SPECIFICATION

(11) **EP 4 403 449 B1**
(45) Date of publication and mention of the grant of the patent: **10.12.2025**
(21) Application number: 23152779.7
(22) Date of filing: 20.01.2023
(51) Int. Cl.: B62J 29/00, B60R 1/02

(54) **BICYCLE REARVIEW DEVICE**
FAHRRADRÜCKBLICKVORRICHTUNG
DISPOSITIF DE RÉTROVISEUR DE BICYCLETTE

(43) Date of publication of application: 24.07.2024
(73) Proprietor: Lee, Dong-Lie, Taichung City 437 (TW)
(72) Inventor: Lee, Dong-Lie, Taichung City 437 (TW)
(74) Representative: Lang, Christian

(56) References cited:
- DE-A1- 102018 113 153
- US-A1- 2019 225 292
- US-B2- 11 453 454

## Description

### BACKGROUND

### Technical Field

The invention relates to bicycle accessories, particularly to a rearview device which can be installed on a bicycle handle bar and is disposed with a rearview mirror.

### Related Art

Regardless of vehicles, motorcycles or bicycles, the rear is the most dangerous because it cannot be directly seen by a driver who is forward seeing the front. Thus, vehicles, motorcycles and part of bicycles are provided with rearview mirrors to make a rider who is forward seeing the front able to see rear traffic so as to improve drive safety. An example of a rearview mirror is provided in DE 10 2018 113 153 A1. However, present rearview mirrors of bicycles can only be adjusted very limitedly, so they are inconvenient and limitative in adjustment, particularly, they cannot be folded to avoid collisions. Thus, this is a problem to be solved. DE 10 2018 113153 A1 discloses the following features of claim 1; a rearview device for being installed on a handle bar of a bicycle, comprising:a mirror support comprising:a Pipe clamp for looping up the handle bar, and having an opening;an arm , having a base and an extended portion connected thereto, and fixed to two sides of the opening by a fastener passing the base to make the Pipe clamp tightly loop up the handle bar, the extended portion extending from the base, and an outer end of the arm having a hole channel;a sleeve, embedded in the hole channel, and having a ball socket inside; anda tightening bolt, passing into the hole channel from an outside of the extended portion for pushing an outer surface of the sleeve to flexibly narrow the sleeve; anda rearview mirror, comprising a frame and a mirror plate mounted on a front side of the frame, wherein a back side of the frame being extended with a connecting portion, the connecting portion is formed with a ball head embedded into the ball socket of the sleeve,wherein the sleeve has a bottom plate and a surrounding wall extending from a periphery of the bottom plate, the ball socket is defined by the bottom plate and the surrounding wall, the surrounding wall is formed with a slot along an axial direction, wherein the extended portion is disposed with a hole communicating with the hole channel, and the tightening bolt passes through and screws with the hole.

### SUMMARY

An object of the invention is to provide a bicycle rearview device, which can be adjusted with multi-angle and allows the rearview mirror to be rotated and folded to an inner space to avoid collisions.

To accomplish the above object, the invention provides a bicycle rearview device, which includes a mirror support and a rearview mirror. The mirror support includes a Pipe clamp for looping up a bicycle handlebar, an arm, a sleeve with a ball socket and a tightening bolt. The arm has a base and an extended portion connected thereto. The base is fixed to the Pipe clamp by a fastener to make the Pipe clamp tightly loop up the handlebar. The extended portion extends from the base. An outer end of the arm has a hole channel. The sleeve is embedded in the hole channel and pushed by the tightening bolt. A back side of the frame is extended with a connecting portion. The connecting portion is formed with a ball head embedded into the ball socket of the sleeve. Thus, the rearview mirror is rotatable and swayable.

### BRIEF DESCRIPTION OF THE DRAWINGS

FIG. 1 is an assembled view of the bicycle rearview device of the invention and an imaginary handlebar;
FIG. 2 is an exploded view of the bicycle device of the invention
FIG. 3 is a cross-sectional view of the invention along the axis line of the base;
FIG. 4 is a radially cross-sectional view of the invention at the flange of the base;
FIG. 5 is a cross-sectional view of the invention along the axis line of the ball head of the rearview mirror;
FIG. 6 is a top plan view of the bicycle rearview device of the invention;
FIG. 7 is a front plan view of the bicycle rearview device of the invention;
FIG. 8 is a perspective schematic view of the back side of the sleeve; and
FIG. 9 is a top schematic view of the bicycle rearview device of the invention in a folded status.

### DETAILED DESCRIPTION

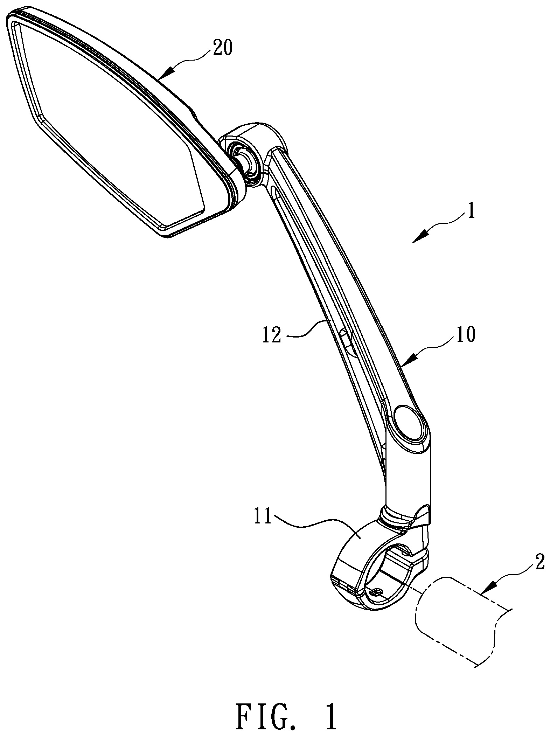

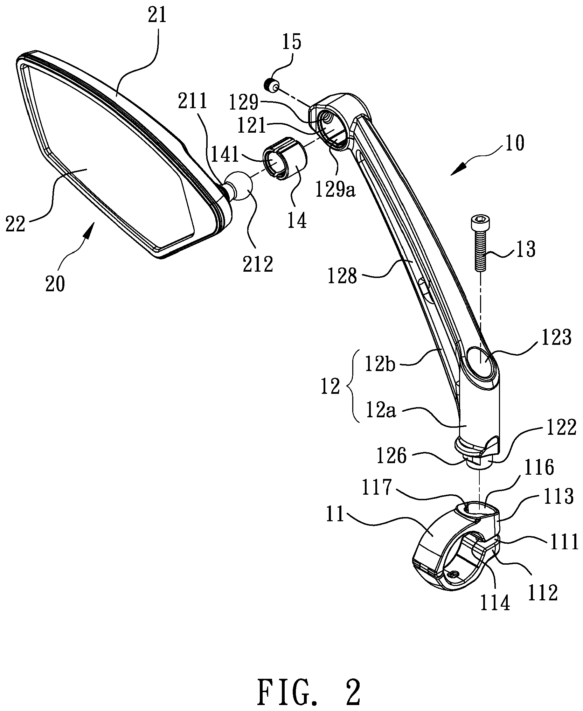

Please refer to FIGS. 1 and 2. The invention provides a rearview device for being installed on a handlebar 2 of a bicycle, which includes a mirror support 10 and a rearview mirror 20.

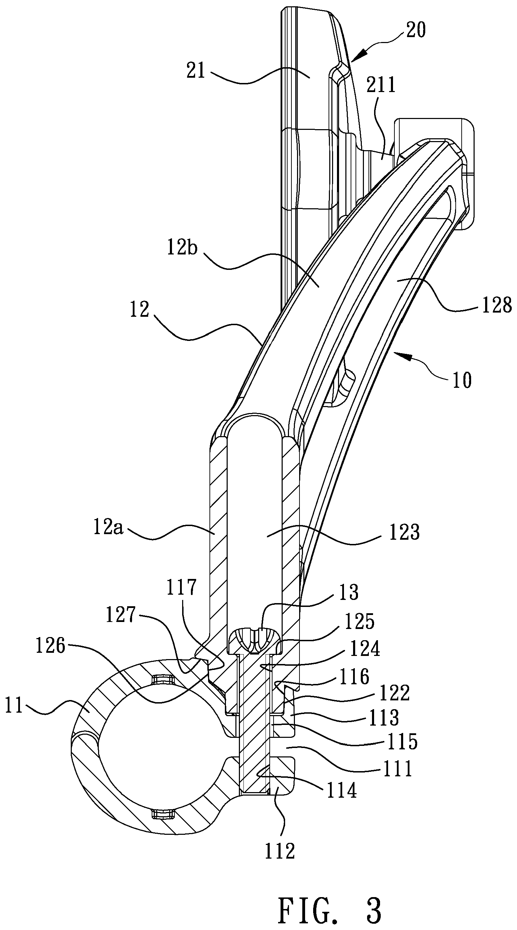

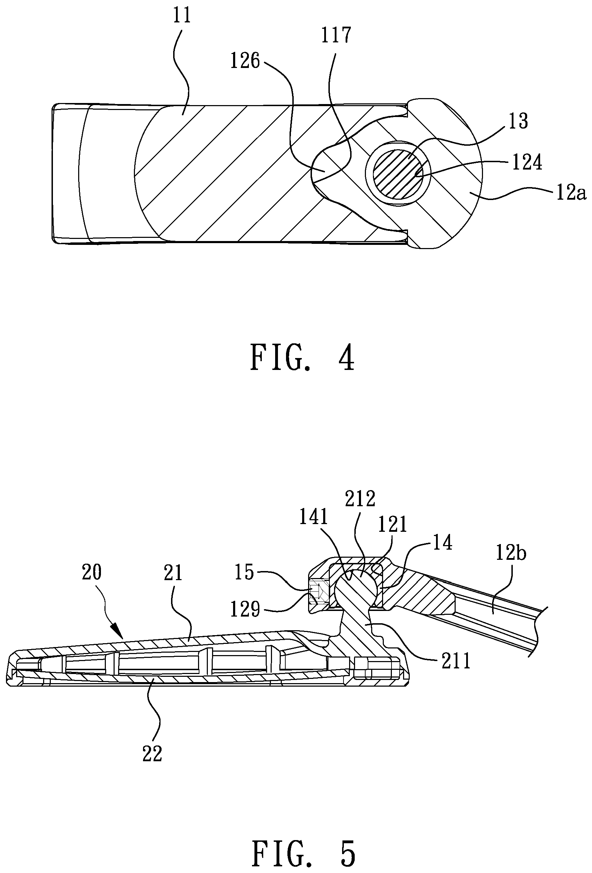

The mirror support 10 includes a Pipe clamp 11 with an opening 111 for looping up an end of the handle bar 2, an arm 12, a sleeve 14 and a tightening bolt 15. The arm 12 has a base 12a and an extended portion 12b connected thereto. The arm 12 is fixed to two sides of the opening 111 by a fastener 13 passing the base 12a to make the Pipe clamp 11 tightly loop up the handlebar 2. As shown in FIGS. 3 and 4, the extended portion 12b extends from the base 12a toward the outside of the handlebar 2. An outer end of the arm 12 has a hole channel 121. The sleeve 14 is embedded in the hole channel 121 and is formed with a ball socket 141 therein. As shown in FIG. 5, the tightening bolt 15 penetrates the hole channel 121 from the outer end of the extended portion 12b to push an outer surface of the sleeve 14 to flexibly narrow the sleeve 14. The rearview mirror 20 includes a frame 21 and a mirror plate 22 mounted on a front side of the frame 21. The back side of the frame 21 is extended with a connecting portion 211. The connecting portion 211 is formed with a ball head 212 embedded into the ball socket 141 of the sleeve 14 so as to make the rearview mirror 20 rotatable and swayable.

In the embodiment, as shown in FIGS. 3 and 4, two sides of the opening 111 of the Pipe clamp 11A is formed with a first wall 112 and a second wall 113, respectively. The first wall 112 is formed with a threaded hole 114 and the second wall 113 is formed with a through hole 115. An outer surface of the second wall 113, which corresponds to the base 12a, is formed with a positioning trough 116 communicating with the through hole 115. The bottom of the base 12a is formed with a positioning bar 122 which is limitedly rotatably embedded into the positioning trough 116. The inside of the base 12a is formed with a passing hole 123 and a connecting hole 124 to allow the fastener 13 to pass the passing hole 123, the connecting hole 124 and the through hole 115 to screw in the threaded hole 114.

The fastener 13 may be a bolt, whose head may abut against a step ring 125 at the junction of the passing hole 123 and the connecting hole 124.

To limit the relative rotation between the positioning bar 122 and the positioning trough 116, a common rotation restraint structure may be provided therebetween. For example, an outer surface of the positioning bar 122 is disposed with a flange 126 and an inner surface of the positioning trough 116 is formed with an engaging trough 117 for being embedded by the flange 126. As shown in FIGS. 2 and 3, this arrangement accomplishes the functions of angular positioning and restraint of relative rotation to be advantageous to rapid and accurate assembly and positioning, and the extending angle and direction of the arm 12 can meet an expected effect.

It is noted that the position of such a projecting-denting structure may be swapped or the positioning bar 122 and the positioning trough 116 are configured to be a non-circular engagement structure. They are also available.

In the embodiment, the junction of an outer surface of the base 12a and an outer surface of the positioning bar 122 is formed with a positioning wall 127 for abutting against an outer surface of the second wall 113 to obtain great connection and appearance.

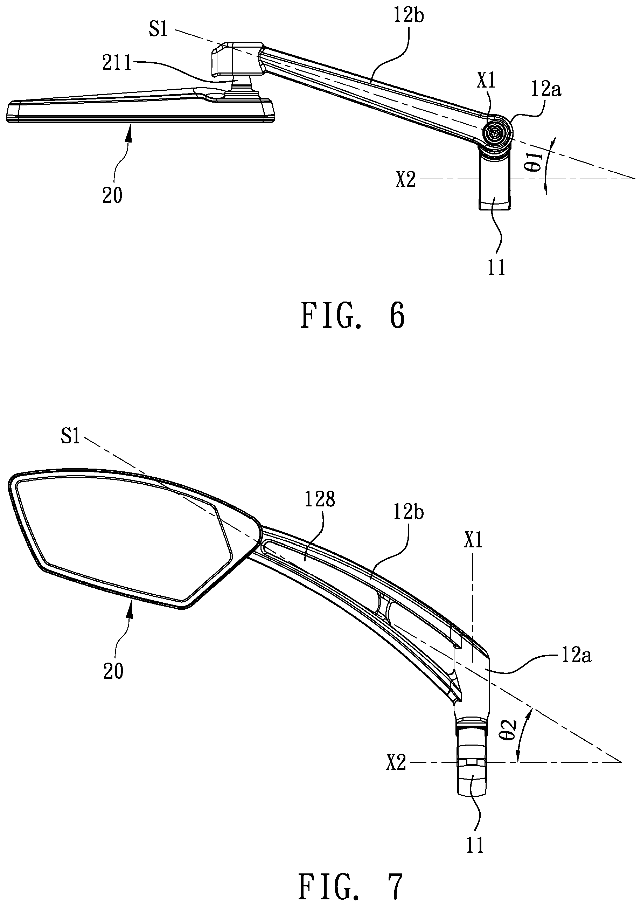

In the embodiment, as shown in FIG. 6, the base 12a has a first axis line X1. The extended portion 12b has an extended line S1. The Pipe clamp 11 has a second axis line X2. When the first axis line X1 is parallel to a vertical plane, the extended line S1 and the second axis line X2 form a first angle θ1 on a horizontal plane. The first angle θ1 is between 10° and 30°. Preferably, the first angle θ1 is about 20°. Thus, the extended portion 12b can be aslant extended toward the end and top of the handlebar 2. When a user is in a riding status, the position of the rearview mirror 20 extends toward the slant front of the left side or the right side of the rider. The advantage is guaranteeing the rider having better sight and distance to reduce the rightward or leftward sway angle of his or her head or view, or the rider can clearly see the rearview mirror 20 with extremely small or even no head sway right and left.

In the embodiment, as shown in FIG. 7, the base 12a has a first axis line X1. The extended portion 12b has an extended line S1. The Pipe clamp 11 has a second axis line X2. When the first axis line X1 is parallel to a vertical plane, the extended line S1 and the second axis line X2 form a second angle θ2 on a vertical plane. The second angle θ2 is between 15° and 45° to make the extended portion 12b aslant extend toward the end and the top of the handlebar 2. Preferably, the second angle θ2 is about 30°. Thus, the extended portion 12b can be aslant extended toward the end and top of the handlebar 2. When a user is in a riding status, the position of the rearview mirror 20 extends toward the slant front of the left side or the right side of the rider. The advantage is guaranteeing the rider having better sight and distance to reduce the rightward or leftward sway angle of his or her head or view, or the rider can clearly see the rearview mirror 20 with extremely small or even no head sway right and left. The first angle θ1 and the second angle θ2 of the embodiment can help each other to make a rider in a riding status reduce the sway extent or avoid the sway of his or her head or view, regardless of or the rider can clearly see the rearview mirror 20 with extremely small or even no head sway regardless of right-left sway or downward sway. As a result, riders can pay all attention to the front traffic so that riding safety can be effectively improved.

In the embodiment, the extended portion 12b is formed with at least one hollow 128 for reducing weight of the extended portion 12b.

In the embodiment, as shown in FIGS. 2, 5 and 8, the sleeve 14 has a bottom plate 142 and a surrounding wall 143 extending from a periphery of the bottom plate 142. The ball socket 143 is defined by an inner surface of the bottom plate 142 and an inner surface of the surrounding wall 143. The surrounding wall 143 is formed with at least one slot 144 along an axial direction to make the surrounding wall 143 can be flexibly narrowed when the tightening bolt 15 presses the sleeve 14.

To enhance the effect of flexible narrowing of the surrounding wall 143, two slots 144 may be provided to make the ball head 212 firmly restrained in the ball socket 141 with allowing the ball head 212 to be forcedly rotated or swayed with a certain force. Preferably, the slot 144 may be extended to a peripheral portion of the bottom plate 142 to reduce the resistance to narrowed deformation of the surrounding wall 143.

In the embodiment, an outer surface of an end of the extended portion 12b is disposed with a threaded hole 129 communicating with the hole channel 121, and the tightening bolt 15 passes through and screws with the threaded hole 129. An inner wall of the hole channel 121 is formed with at least one hole plane 129a. An outer surface of the surrounding wall 143 of the sleeve 14 is formed with a restraint plane 145 for engaging with the hole plane 129a. Thus, the sleeve 14 can be rapidly and accurately installed and positioned in the hole channel 121 of the extended portion 12b.

The embodiment is provided with two hole planes 129a and two restraint planes 145. The hole planes 129a are substantially perpendicular to the hole 129 to ensure that the surrounding wall 143 of the sleeve 143 can generate a great effect of flexible narrowing when the tightening bolt 15 presses the sleeve 14.

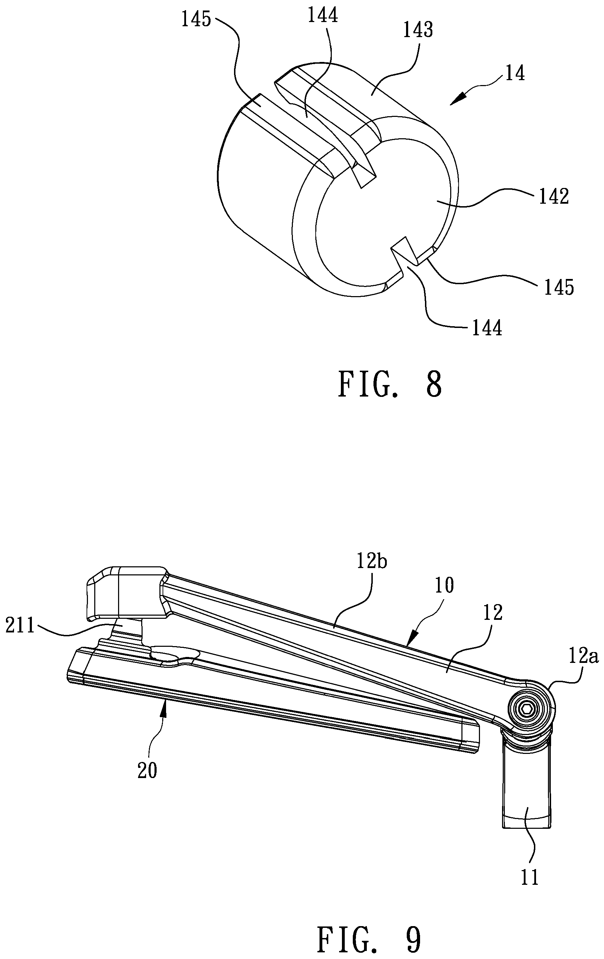

Accordingly, the rearview device 1 of the invention has the following advantages and features:
1. The mirror support 10 uses the Pipe clamp 11 to be fixed on the handlebar 2, so the mirror support 10 can be firmly assembled on the handle bar 2 without loosening.
2. After the base 12a of the mirror support 10 is installed on the Pipe clamp 11, the special extension and angle of the extended portion 12b, especially the design of the first angle θ1 and the second angle θ2, makes the rearview mirror 20 be just at an aslant front and an aslant upper position of a rider. Such a position and extending angle can guarantee the rearview mirror 20 to have a better sight without obstructing sight by his or her body or arms. Thus, the rider can have a clear front sight and rear traffic to improve riding safety.
3. The rearview device 1 adopts a design of a single joint, which can simplify the structure, so the components are less, and the production costs and the assembly costs can be reduced. The joint adopts the ball-shaped structure, which allows rotary and swayable adjustments. That is, the rearview mirror 20 can be three-dimensionally adjusted. A rider can simply and rapidly adjust the mirror to a required position and angle.
4. The rearview device 1 has a single joint, but the exquisite structure makes the rearview mirror 20 simply rotated to be swayed beside the extended portion 12b as shown in FIG. 9. This significantly reduce the overall volume, so the required storage space and package space of the product are small to reduce the package and transportation costs. In addition, in some circumstances, such as not riding, the above simple and rapid folding can prevent the rearview mirror 20 from being damaged.

## Claims

1. A rearview device for being installed on a handle bar of a bicycle, comprising:
a mirror support comprising:
a Pipe clamp (11) for looping up the handle bar (2), and having an opening;
an arm (12), having a base (12a) and an extended portion (12b) connected thereto, and fixed to two sides of the opening by a fastener (13) passing the base (12a) to make the Pipe clamp (11) tightly loop up the handle bar (2), the extended portion (12b) extending from the base(12a), and an outer end of the arm (12) having a hole channel (121);
a sleeve (14), embedded in the hole channel (121), and having a ball socket (141) inside; and
a tightening bolt (15), passing into the hole channel (121) from an outside of the extended portion (12b) for pushing an outer surface of the sleeve (14) to flexibly narrow the sleeve (14); and
a rearview mirror (20), comprising a frame (21) and a mirror plate (22) mounted on a front side of the frame (21), wherein a back side of the frame (21) being extended with a connecting portion (211), the connecting portion (211) is formed with a ball head (212) embedded into the ball socket (141) of the sleeve (14),
wherein the sleeve (14) has a bottom plate (142) and a surrounding wall (143) extending from a periphery of the bottom plate (142) , the ball socket (141) is defined by the bottom plate (142) and the surrounding wall (143), the surrounding wall (143) is formed with a slot (144) along an axial direction, wherein an outer surface of an end of the extended portion (12b) is disposed with a threaded hole (129) communicating with the hole channel (121), and the tightening bolt (15) passes through and screws with the threaded hole (129),
an inner wall of the hole channel (121) is formed with two hole planes (129a), and an outer surface of
the surrounding wall (143) of the sleeve (14) is formed with two restraint planes (145) for engaging with the hole planes (129a) so that the sleeve (14) can be rapidly and accurately installed and positioned in the hole channel (121) of the extended portion (12b), wherein the hole planes (145) and the threaded hole (129) are arranged to be perpendicular.

2. The rearview device of claim 1, wherein the two sides of the opening of the Pipe clamp (11) is formed with a first wall (112) and a second wall (113), respectively, the first wall (112) is formed with a threaded hole (114) , the second wall (113) is formed with a through hole (115), an outer surface of the second wall (113), which corresponds to the base (12a), is formed with a positioning trough (116) communicating with the through hole (115), a bottom of the base (12a) is formed with a positioning bar (122) which is limitedly rotatably embedded into the positioning trough (116), an inside of the base (12a) is formed with a passing hole (123) and a connecting hole (124) to allow the fastener (13) to pass the passing hole (123), the connecting hole (124) and the through hole (115) to screw in the threaded hole.

3. The rearview device of claim 2, wherein an outer surface of the positioning bar (122) is disposed with a flange (126), and an inner surface of the positioning trough (116) is formed with an engaging trough for being embedded by the flange (126).

4. The rearview device of claim 2, wherein a junction of an outer surface of the base (12a) and an outer surface of the positioning bar (122) is formed with a positioning wall (127) for abutting against an outer surface of the second wall.

5. The rearview device of claim 1, wherein the base (12a) has a first axis line, the extended portion (12b) has an extended line, the Pipe clamp (11) has a second axis line, the extended line and the second axis line form a first angle on a horizontal plane when the first axis line is parallel to a vertical plane, and the first angle is between 10° and 30°.

6. The rearview device of claim 1, wherein the base (12a) has a first axis line, the extended portion (12b) has an extended line, the Pipe clamp (11) has a second axis line, the extended line and the second axis line form a second angle on a vertical plane when the first axis line is parallel to a vertical plane, and the second angle is between 15° and 45°.

7. The rearview device of claim 1, wherein the extended portion (12b) is formed with a hollow.

## Patentansprüche

1. Rückblickvorrichtung zur Anbringung an einem Fahrradlenker, welche umfasst:
eine Spiegelhalterung, die umfasst:
eine Rohrklemme (11) zum Umschlingen des Lenkers (2), und eine Öffnung aufweisend;
einen Arm (12), der eine Basis (12a) und einen damit verbundenen verlängerten Abschnitt (12b) aufweist, und an zwei Seiten der Öffnung durch ein Befestigungselement (13) befestigt ist, das durch die Basis (12a) hindurchgeht, um zu bewirken, dass die Rohrklemme (11) den Lenker (2) fest umschließt, wobei sich der verlängerte Abschnitt (12b) von der Basis(12a) erstreckt, und ein äußeres Ende des Arms (12) einen Lochkanal (121) aufweist;
eine Hülse (14), die in den Lochkanal (121) eingebettet ist, und im Inneren eine Kugelpfanne (141) aufweist; und
einen Spannbolzen (15), der von einer Außenseite des verlängerten Abschnitts (12b) in den Lochkanal (121) hineinragt, um eine Außenfläche der Hülse (14) zu drücken, um die Hülse (14) flexibel zu verengen; und
einen Rückspiegel (20), der einen Rahmen (21) und eine Spiegelplatte (22) umfasst, die an einer Vorderseite des Rahmens (21) angebracht ist, wobei eine Rückseite des Rahmens (21) mit einem Verbindungsabschnitt (211) verlängert ist, wobei der Verbindungsabschnitt (211) mit einem Kugelkopf (212) ausgebildet ist, der in die Kugelpfanne (141) der Hülse (14) eingebettet ist,
wobei die Hülse (14) eine Bodenplatte (142) und eine umgebende Wand (143) aufweist, die sich von einem Umfang der Bodenplatte (142) aus erstreckt, wobei die Kugelpfanne (141) durch die Bodenplatte (142) und die umgebende Wand (143) definiert ist, wobei die umgebende Wand (143) mit einem Schlitz (144) entlang einer axialen Richtung ausgebildet ist, wobei eine Außenfläche eines Endes des verlängerten Abschnitts (12b) mit einem Gewindeloch (129) versehen ist, das mit dem Lochkanal (121) in Verbindung steht, und wobei der Spannbolzen (15) durch das Gewindeloch (129) hindurchgeht und mit diesem verschraubt ist,
wobei eine Innenwand des Lochkanals (121) mit zwei Lochflächen (129a) ausgebildet ist, und eine Außenfläche der umgebenden Wand (143) der Hülse (14) mit zwei Halteflächen (145) zum Eingriff mit den Lochflächen (129a) ausgebildet ist, sodass die Hülse (14) schnell und präzise in dem Lochkanal (121) des verlängerten Abschnitts (12b) installiert und positioniert werden kann, wobei die Lochflächen (145) und das Gewindeloch (129) senkrecht zueinander angeordnet sind.

2. Rückblickvorrichtung nach Anspruch 1, bei welcher die zwei Seiten der Öffnung der Rohrklemme (11) entsprechend mit einer ersten Wand (112) und einer zweiten Wand (113) ausgebildet sind, wobei die erste Wand (112) mit einem Gewindeloch (114) ausgebildet ist und die zweite Wand (113) mit einem Durchgangsloch (115) ausgebildet ist, wobei eine Außenfläche der zweiten Wand (113), die mit der Basis (12a) korrespondiert, mit einer Positionierungsmulde (116) ausgebildet ist, die mit dem Durchgangsloch (115) in Verbindung steht, wobei ein Boden der Basis (12a) mit einer Positionierungsstange (122) ausgebildet ist, die begrenzt drehbar in die Positionierungsmulde (116) eingebettet ist, wobei ein Inneres der Basis (12a) mit einem Durchführloch (123) und einem Verbindungsloch (124) ausgebildet ist, damit das Befestigungselement (13) durch das Durchführloch (123), das Verbindungsloch (124) und das Durchgangsloch (115) hindurchgeführt werden kann, um in das Gewindeloch eingeschraubt zu werden.

3. Rückblickvorrichtung nach Anspruch 2, bei welcher eine Außenfläche der Positionierungsstange (122) mit einem Flansch (126) versehen ist, und eine Innenfläche der Positionierungsmulde (116) mit einer Eingriffsmulde ausgebildet ist, die durch den Flansch (126) einbettbar ist.

4. Rückblickvorrichtung nach Anspruch 2, bei welcher eine Verbindungsstelle einer Außenfläche der Basis (12a) und einer Außenfläche der Positionierungsstange (122) mit einer Positionierungswand (127) zum Anstoßen an eine Außenfläche der zweiten Wand ausgebildet ist.

5. Rückblickvorrichtung nach Anspruch 1, bei welcher die Basis (12a) eine erste Achsenlinie aufweist, der verlängerte Abschnitt (12b) eine verlängerte Linie aufweist, die Rohrklemme (11) eine zweite Achsenlinie aufweist, wobei die verlängerte Linie und die zweite Achsenlinie einen ersten Winkel an einer horizontalen Ebene bilden, wenn die erste Achsenlinie parallel zu einer vertikalen Ebene ist, und der erste Winkel zwischen 10° und 30° beträgt.

6. Rückblickvorrichtung nach Anspruch 1, bei welcher die Basis (12a) eine erste Achsenlinie aufweist, der verlängerte Abschnitt (12b) eine verlängerte Linie aufweist, die Rohrklemme (11) eine zweite Achsenlinie aufweist, wobei die verlängerte Linie und die zweite Achsenlinie einen zweiten Winkel an einer vertikalen Ebene bilden, wenn die erste Achsenlinie parallel zu einer vertikalen Ebene ist, und der zweite Winkel zwischen 15° und 45° beträgt.

7. Rückblickvorrichtung nach Anspruch 1, bei welcher der verlängerte Abschnitt (12b) mit einer Vertiefung ausgebildet ist.

## Revendications

1. Dispositif de rétroviseur destiné à être installé sur le guidon d'une bicyclette, comprenant :
un support de miroir comprenant :
un collier de serrage (11) pour s'enrouler autour du guidon (2), et présentant une ouverture ;
un bras (12), présentant une base (12a) et une partie prolongée (12b) raccordée à celle-ci, et fixé aux deux côtés de l'ouverture par une attache (13) passant par la base (12a) pour faire en sorte que le collier de serrage (11) s'enroule étroitement autour du guidon (2), la partie prolongée (12b) s'étendant à partir de la base (12a), et une extrémité extérieure du bras (12) présentant un canal de trou (121) ;
un manchon (14), encastré dans le canal de trou (121), et présentant une douille sphérique (141) à l'intérieur ; et
un boulon de serrage (15), passant dans le canal de trou (121) depuis l'extérieur de la partie prolongée (12b) pour pousser une surface extérieure du manchon (14) afin de rétrécir de manière flexible le manchon (14) ; et
un rétroviseur (20), comprenant un cadre (21) et une plaque de rétroviseur (22) montée sur une face avant du cadre (21), dans lequel une face arrière du cadre (21) est prolongée par une partie de raccordement (211), la partie de raccordement (211) est formée avec une rotule (212) encastrée dans la douille sphérique (141) du manchon (14), dans lequel le manchon (14) présente une plaque inférieure (142) et une paroi périphérique (143) s'étendant depuis une périphérie de la plaque inférieure (142), la douille sphérique (141) est définie par la plaque inférieure (142) et la paroi périphérique (143), la paroi périphérique (143) est formée avec une fente (144) le long d'une direction axiale, dans lequel une surface extérieure d'une extrémité de la partie prolongée (12b) est pourvue d'un trou fileté (129) communiquant avec le canal de trou (121), et le boulon de serrage (15) traverse et se visse dans le trou fileté (129),
une paroi intérieure du canal de trou (121) est formée avec deux plans de trou (129a), et une surface extérieure de la paroi périphérique (143) du manchon (14) est formée avec deux plans de retenue (145) pour s'engager avec les plans de trou (129a) de sorte que le manchon (14) puisse être installé et positionné rapidement et avec précision dans le canal de trou (121) de la partie prolongée (12b), dans lequel les plans de trou (145) et le trou fileté (129) sont agencés pour être perpendiculaires.

2. Dispositif de rétroviseur selon la revendication 1, dans lequel les deux côtés de l'ouverture du collier de serrage (11) sont formés avec une première paroi (112) et une seconde paroi (113), respectivement, la première paroi (112) est formée avec un trou fileté (114), la seconde paroi (113) est formée avec un trou traversant (115), une surface extérieure de la seconde paroi (113), qui correspond à la base (12a), est formée avec un creux de positionnement (116) communiquant avec le trou traversant (115), un fond de la base (12a) est formé avec une barre de positionnement (122) qui est intégrée de manière rotative limitée dans le creux de positionnement (116), un intérieur de la base (12a) est formé avec un trou de passage (123) et un trou raccordement (124) pour permettre à l'attache (13) de passer le trou de passage (123), le trou de raccordement (124) et le trou traversant (115) pour se visser dans le trou fileté.

3. Dispositif de rétroviseur selon la revendication 2, dans lequel une surface extérieure de la barre de positionnement (122) est pourvue d'une bride (126), et une surface intérieure du creux de positionnement (116) est formée avec un creux d'engagement destiné à être encastré par la bride (126).

4. Dispositif de rétroviseur selon la revendication 2, dans lequel une jonction d'une surface extérieure de la base (12a) et d'une surface extérieure de la barre de positionnement (122) est formée avec une paroi de positionnement (127) destinée à venir en butée contre une surface extérieure de la seconde paroi.

5. Dispositif de rétroviseur selon la revendication 1, dans lequel la base (12a) présente une première ligne d'axe, la partie prolongée (12b) présente une ligne prolongée, le collier de serrage (11) présente une seconde ligne d'axe, la ligne prolongée et la seconde ligne d'axe forment un premier angle sur un plan horizontal lorsque la première ligne d'axe est parallèle à un plan vertical, et le premier angle est compris entre 10° et 30°.

6. Dispositif de rétroviseur selon la revendication 1, dans lequel la base (12a) présente une première ligne d'axe, la partie prolongée (12b) présente une ligne prolongée, le collier de serrage (11) présente une seconde ligne d'axe, la ligne prolongée et la seconde ligne d'axe forment un second angle sur un plan vertical lorsque la première ligne d'axe est parallèle à un plan vertical, et le second angle est compris entre 15° et 45°.

7. Dispositif de rétroviseur selon la revendication 1, dans lequel la partie prolongée (12b) est formée avec un creux.
